# EUROPEAN PATENT APPLICATION

(11) **EP 3 412 552 A1**
(43) Date of publication of application: **12.12.2018**
(21) Application number: 17174425.3
(22) Date of filing: 05.06.2017
(51) Int. Cl.: B62M 6/45, B62M 6/50, B60L 15/20

(54) **CONTROL SYSTEM FOR ELECTRIC BIKES CONNECTED VIA A WIRELESS NETWORK**

(71) Applicant: Guan Hung Technology Co., Ltd., Taichung City 40861 (TW)
(72) Inventor: Lee, Wen-Sung, 40861 TAICHUNG CITY (TW)
(74) Representative: Cabinet Chaillot

(57) **Abstract**

A control system for an electric bike includes control application which receives battery/motor output signals from other electric bikes from the cloud processing center to as to control the output of the battery to the motor to adjust the output of the battery and the motor at different travel routes. The adjusted output of the battery and the motor at different travel routes of the users' electric bike is transmitted to the transmitters of other electric bikes by a smart phone so as to reduce the burden of learning of the users of other electric bikes.

## Description

### BACKGROUND OF THE INVENTION

### 1. Fields of the invention

The present invention relates to a control system for an electric bike, and more particularly, to a control system which receives data and commands from cloud processing center and adjust the output of the battery and the motor of the electric bike.

### 2. Descriptions of Related Art

The conventional electric bikes also called E-bikes are used widely and the main feature of the conventional electric bikes is to utilize the motor to provide assistant force to the electric bike so that the user can easily and comfortably operate the electric bike regardless the road conditions. There are different operational modes available for the user to choose, nevertheless, the switch between the different operational modes is made by manual way. The users have to learn and adapt the operational modes for a period of time, and this may be a burden for some users.

Besides, the structure of the conventional electric bikes involves a complicated structure which includes a gear system cooperated with a motor, and the motor is powered by a battery. Usually, the users are required to have a certain level of knowledge to the gear system to smoothly and quickly operate the electric bike. The electric bike may not perform as desired if the user chooses an improper operational mode. How to allow the users to quickly operate the electric bikes without too much burden of learning processes is an important factor for the development of the electric bikes.

The present invention intends to provide a control system which is connected to a cloud processing center by wireless method so as to get necessary information to easily operate the electric bikes.

### SUMMARY OF THE INVENTION

The present invention relates to a control system and comprises multiple electric bikes each having a motor, a battery, a micro controller, a dynamic status detector and a transmitter electrically connected to each other. The dynamic status detector sensor detects dynamic statuses of the multiple electric bikes to obtain multiple detected values. The micro controller receives the detected values and generates a battery/motor output signal so as to control the output of the battery to the motor to assist movement of the electric bike. The transmitter is connected to a smart phone by wireless way and transmits the battery/motor output signal and the detected values to the smart phone. The smart phone is connected to a cloud processing center by wireless way and downloads a control application. The smart phone includes a Globe Positioning System which manages travel routes and provides guidance for the electric bike. The smart phone uploads the battery/motor output signal and the detected values to the cloud processing center from the beginning point of the travel route.

The cloud processing center includes the control application, and receives the battery/motor output signal and the detected values from each electric bike moving on the travel routes. The control application adjusts the battery/motor output signal according to the received battery/motor output signal and the detected values. The adjusted battery/motor output signal is transmitted to the micro controller by the smart phone and the transmitter so as to control the output of the battery to the motor.

Preferably, the dynamic status detector is a G-sensor.

Preferably, the detected values include current speed, initial speed, average speed, G-force, average G-force, upward slope and downward slope of the electric bike by the G-sensor.

Preferably, the adjusted battery/motor output signal varies in different travel routes so as to form multiple riding modes.

Preferably, the multiple riding modes formed by the adjusted battery/motor output signal of the control application include an economic mode and a sport mode.

The present invention will become more apparent from the following description when taken in connection with the accompanying drawings which show, for purposes of illustration only, a preferred embodiment in accordance with the present invention.

### BRIEF DESCRIPTION OF THE DRAWINGS

Fig. 1 illustrates the operational status of the control system of the present invention;
Fig. 2 illustrates the components of the control system of the present invention, and
Fig. 3 illustrates that a user riding the electric bike with the control system of the present invention installed thereto.

### DETAILED DESCRIPTION OF THE PREFERRED EMBODIMENT

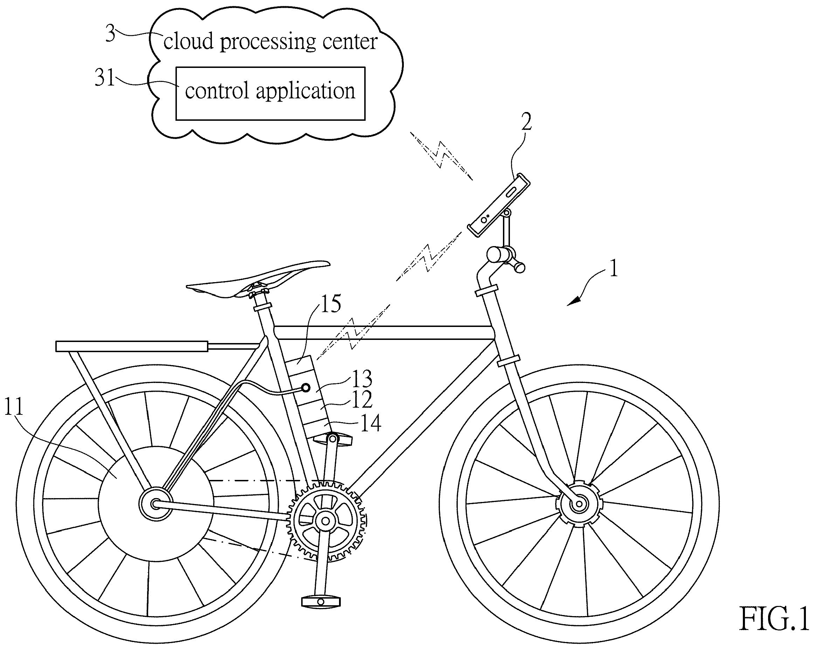

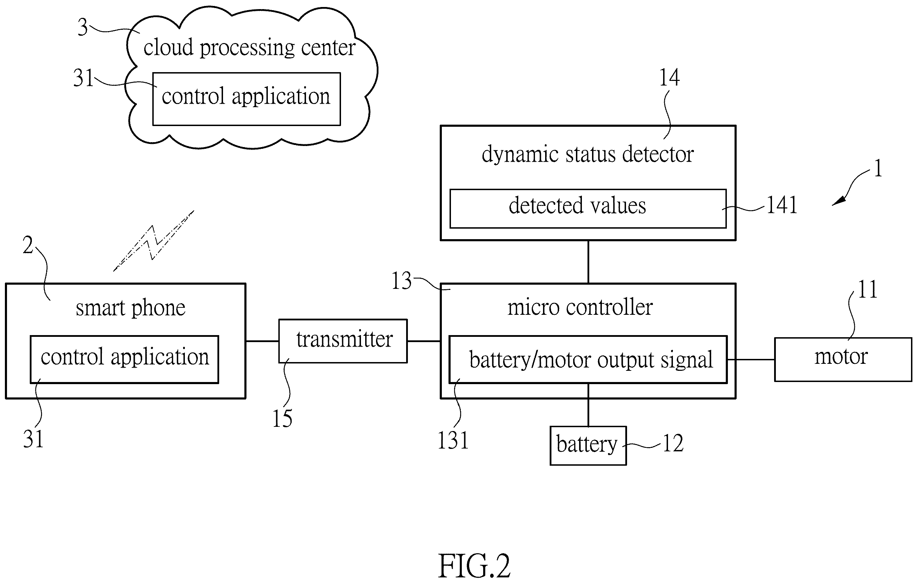

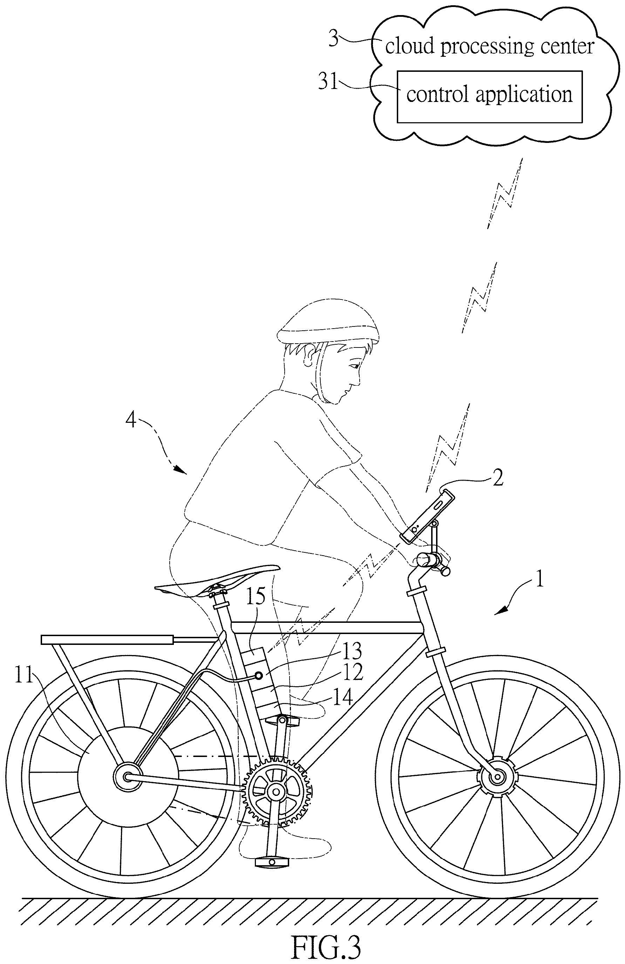

Referring to Figs. 1 to 3, the control system of the present invention comprises multiple electric bikes 1 and each electric bike 1 has a motor 11, a battery 12, a micro controller 13, a dynamic status detector 14 and a transmitter 15 electrically connected to each other.

The dynamic status detector sensor 14 detects dynamic statuses of the multiple electric bikes 1 to obtain multiple detected values 141. The micro controller 13 receives the detected values 141 and generates a battery/motor output signal 131 so as to control the output of the battery 12 to the motor 11 to assist movement of the electric bike 1. Preferably, the dynamic status detector 14 is a G-sensor. The detected values 141 include current speed, initial speed, average speed, G-force, average G-force, upward slope and downward slope of the electric bike 1 by the G-sensor.

The transmitter 15 is connected to a smart phone 2 by wireless way and transmits the battery/motor output signal 131 and the detected values 141 to the smart phone 2. The smart phone 2 is connected to a cloud processing center 3 by wireless way and downloads a control application 31. The smart phone 2 includes a Globe Positioning System which manages travel routes and provides guidance for the electric bike 1. The smart phone 2 uploads the battery/motor output signal 131 and the detected values 141 to the cloud processing center 3 from the beginning point of the travel route.

The cloud processing center 3 includes the control application 31, and receives the battery/motor output signal 131 and the detected values 141 from each electric bike 1 moving on the travel routes. The control application 31 adjusts the battery/motor output signal 131 according to the received battery/motor output signal 131 and the detected values 141. The adjusted battery/motor output signal 131 is transmitted to the micro controller 13 by the smart phone 2 and the transmitter 15 so as to control the output of the battery 12 to the motor 11. The adjusted battery/motor output signal 131 varies in different travel routes so as to form multiple riding modes. Preferably, the multiple riding modes formed by the adjusted battery/motor output signal 131 of the control application 31 include an economic mode and a sport mode.

The cloud processing center 3 receives the battery/motor output signal 131 and the detected values 141 from multiple electric bikes 1, and the individual user is able to download the battery/motor output signal 131 and the detected values 141 from the cloud processing center 3 and therefore adjusts the optimized output of the battery 12 and the motor 11 in different road situations.

The control system includes provides an economic mode and a sport mode established by the adjusted battery/motor output signal 131 of the control application 31, so that the user can choose the proper mode as needed.

While we have shown and described the embodiment in accordance with the present invention, it should be clear to those skilled in the art that further embodiments may be made without departing from the scope of the present invention.

## Claims

1. A control system for an electric bike (1), **characterized in that**:
multiple electric bikes (1) and each electric bike (1) has a motor (11), a battery (12), a micro controller (13), a dynamic status detector (14) and a transmitter (15) electrically connected to each other, the dynamic status detector sensor (14) detects dynamic statuses of the multiple electric bikes (1) to obtain multiple detected values (141), the micro controller (13) receives the detected values (141) and generates a battery/motor output signal (131) so as to control an output of the battery (12) to the motor (11) to assist movement of the electric bike (1), the transmitter (15) is connected to a smart phone (2) by wireless way and transmits the battery/motor output signal (131) and the detected values (141) to the smart phone (2), the smart phone (2) is connected to a cloud processing center (3) by wireless way and downloads a control application (31), the smart phone (2) includes a Globe Positioning System which manages travel routes and provides guidance for the electric bike (1), the smart phone (2) uploads the battery/motor output signal (131) and the detected values (141) to the cloud processing center (3) from a beginning point of the travel route, and
the cloud processing center (3) includes the control application (31), and receives the battery/motor output signal (131) and the detected values (141) from each electric bike (1) moving on the travel routes, the control application (31) adjusts the battery/motor output signal (131) according to the received battery/motor output signal (131) and the detected values (141), the adjusted battery/motor output signal (131) is transmitted to the micro controller (13) by the smart phone (2) and the transmitter (15) so as to control the output of the battery (12) to the motor (11).

2. The control system as claimed in claim 1, wherein the dynamic status detector (14) is a G-sensor.

3. The control system as claimed in claim 2, wherein the detected values (141) include current speed, initial speed, average speed, G-force, average G-force, upward slope and downward slope of the electric bike (1) by the G-sensor.

4. The control system as claimed in claim 1, wherein the adjusted battery/motor output signal (131) varies in different travel routes so as to form multiple riding modes.

5. The control system as claimed in claim 4, wherein the multiple riding modes formed by the adjusted battery/motor output signal (131) of the control application (31) include an economic mode and a sport mode.
